# EUROPEAN PATENT APPLICATION

(11) **EP 1 715 206 A1**
(43) Date of publication of application: **25.10.2006**
(21) Application number: 04807827.3
(22) Date of filing: 17.12.2004
(51) Int. Cl.: F16D 3/20, F16D 3/22, F16C 3/02

(54) **CONSTANT VELOCITY UNIVERSAL JOINT**

(30) Priority: 13.02.2004 JP 2004037382
(71) Applicant: NTN CORPORATION, Osaka-shi, Osaka 550-0003 (JP)
(72) Inventor: ISHIJIMA, Minoru, c/o NTN Corporation, Iwata-shi, Shizuoka 4380037 (JP); YAMAZAKI, Kenta, c/o NTN Corporation, Iwata-shi, Shizuoka 4380037 (JP)
(74) Representative: White, Duncan Rohan
(86) International application number: PCT/JP2004/019472
(87) International publication number: WO 2005/078300

(57) **Abstract**

The present invention aims to achieve the high rigidity and light weight of a connecting shaft of a constant velocity universal joint, and to reduce manufacturing costs. A hollow connecting shaft 5 is provided with an axial end section 5c having teeth 5c which are engaged with an engagement section 2d of an inner member 2, and a middle section 5d continued from the axial end section 5c. To mold the connecting shaft 5, both end sections of a pipe material with an outside diameter dm are drawn, and then the teeth (splines or serrations) 5c are molded in the outer periphery of the drawing-molded axial end section 5c on an axial end side by form rolling or the like. The outside diameter of the axial end section 5c is ds, and the outside diameter of the middle section 5d is dm as with that of the pipe material (ds < dm).

## Description

### TECHNICAL FIELD

The present invention relates to a constant velocity universal joint in which a hollow connecting shaft is coupled to an engagement section of an inner member, and in particular relates to the joint suitable for steering, a propeller shaft, or a drive shaft of an automobile.

### BACKGROUND ART

A constant velocity universal joint is broadly classified into a fixed type which allows only angular displacement between two axes and a slide type which allows the angular displacement and axial displacement, and each type is chosen in accordance with a working condition, application, and the like. A Rzeppa-type constant velocity universal joint (ball fixed joint) is typical of the fixed type, and a double offset-type constant velocity universal joint is typical of the slide type.

The foregoing constant velocity universal joint is widely used in a power transmission device of an automobile, for example, for coupling a drive shaft or a propeller shaft of the automobile. To couple the drive shaft or the propeller shaft of the automobile, the fixed type and slide type constant velocity universal joints are generally used in a pair. For example, the power transmission device for transmitting the motive power of an engine of the automobile to wheels has to correspond with the angular displacement and the axial displacement in response to variation in the relative positional relationship between the engine and the wheels. Thus, an end of the drive shaft installed between an engine side and a wheel side is coupled to a differential through the slide type constant velocity universal joint, and the other end is coupled to the wheel through the fixed type constant velocity universal joint.

### DISCLOSURE OF THE INVENTION

### PROBLEMS TO BE SOLVED BY THE INVENTION

In the constant velocity universal joint, as measures against the vibration of a vehicle and the like, there is a case where a damper is attached to a connecting shaft coupled to an engagement section of an inner member, or the diameter of the connecting shaft is enlarged and the connecting shaft is made hollow to ensure high torsional rigidity and flexural rigidity concurrently with to lighten its weight. It has already known that the tuning of flexural first natural frequency is effective as measures against beat sound, middle or high-speed muffled sound, and the like. Thus, the foregoing damper is provided or the connecting shaft is made large in diameter and hollow. The attachment of the damper, however, causes increase in cost. Furthermore, improvement in the torsional rigidity of the connecting shaft cannot be expected though the tuning of the frequency is possible.

An object of the present invention is to achieve increase in rigidity and reduction in weight of a connecting shaft at the same time in a constant velocity universal joint, and also to reduce manufacturing costs.

### MEANS FOR SOLVING THE PROBLEMS

To solve the foregoing problem, a constant velocity universal joint according to the present invention comprises: an outer member provided with a spherical inner surface in which a plurality of track grooves are formed; an inner member provided with a spherical outer surface in which a plurality of track grooves are formed; balls disposed in wedge-shaped ball tracks which are formed by the synergy between the track grooves of the outer member and the track grooves of the inner member; and a retainer disposed between the spherical inner surface of the outer member and the spherical outer surface of the inner member to hold the balls. The balls always make contact with the ball tracks by preload applying means.

The constant velocity universal joint further comprises a hollow connecting shaft. The hollow connecting shaft is provided with an axial end section having teeth which are engaged with an engagement section of the inner member, and a middle section continued from the axial end section. A ratio r3 (= dm/DOUTER) of an outside diameter (dm) of the middle section of the connecting shaft to an outer diameter (DOUTER) of the outer member is 0.26 ≦ r3 ≦ 1.0.

Since the connecting shaft of the steering constant velocity universal joint is made hollow, it is possible to reduce its weight and increase rigidity. Also when a slide mechanism is provided as a steering system, it is possible to mold the connecting shaft integrally with an outside pipe member such as a slide spline.

A ratio r2 (= DOUTER/PCDSERR) between the outside diameter (DOUTER) of the outer member and a pitch circle diameter (PCDSERR) of the teeth in the engagement section of the inner member may be set in a range of 3.0 ≦ r2 ≦ 5.0.

The reason of 3.0 ≦ r2 ≦ 5.0 is as follows. Namely, the pitch circle diameter (PCDSERR) of the teeth in the engagement section of the inner member cannot be extensively varied in relation to the strength of the connecting shaft and the like. Thus, the value of r2 mainly depends on the outside diameter (DOUTER) of the outer member. In case of r2 < 3.0 (generally when the outside diameter DOUTER is small), the thickness of each member (the outer member, the inner member, or the like) becomes too thin, so that there is concern about strength. In case of r2>5.0 (generally when the outside diameter DOUTER is large), on the other hand, a practical problem may occur due to its dimensions and the like, and the object of miniaturization cannot be achieved. 3.0 ≦ r2 ≦ 5.0 can sufficiently ensure the strength of the outer member and the like and the durability of the joint, and also satisfy a practical request.

The foregoing hollow connecting shaft is molded by means of drawing an end section of a pipe material with an outside diameter (dm).

### ADVANTAGE OF THE INVENTION

The present invention has effects described below.
(1) It is possible to accomplish the high rigidity and light weight of the connecting shaft at the same time by means of making the connecting shaft hollow and increasing the diameter of the connecting shaft.
(2) Increase in the natural frequency of an axial section expands the range of frequency selection (tuning), so that it becomes easier to carry out optimal tuning to reduce wobbling.
(3) Therefore, it is possible to improve the NVH characteristics of a vehicle.
(4) When the connecting shaft is molded by drawing the pipe material, a drawing ratio is held low, so that it is possible to reduce manufacturing costs.
(5) By using the joint for steering, it is possible to ensure constant velocity at an arbitrary operating angle, so that flexibility in the design of the vehicle is increased.

### BRIEF DESCRIPTION OF THE DRAWINGS

Fig. 1 is a longitudinal sectional view of a joint in the case where the present invention is applied to a constant velocity universal joint for steering;
Fig. 2 is a cross sectional view of the joint of Fig. 1;
Fig. 3 is a sectional view of a plunger unit section;
Fig. 4 is an enlarged sectional view of the plunger unit section; and
Fig. 5(A) is a plan view of a steering device, (B) is a side view of the steering device, and (C) is a perspective view of the steering device.

### BEST MODE FOR CARRYING OUT THE INVENTION

An embodiment of a constant velocity universal joint according to the present invention will be hereinafter described in detail. The embodiment described below takes a case in which the present invention is applied to a Rzeppa-type (BJ), being a kind of fixed-type constant velocity universal joint, as an example. The present invention, however, is not limited to that, and is also applicable to an undercut free-type (UJ). The constant velocity universal joint according to the present invention is available for not only steering but also a drive shaft or a propeller shaft.

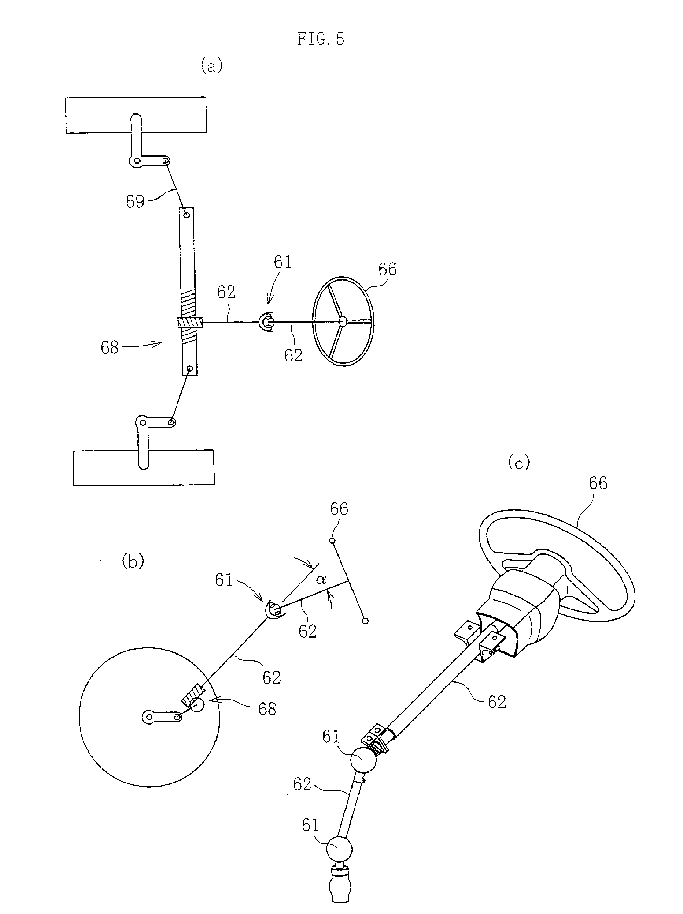

First, a steering device in which the fixed-type constant velocity universal joint is installed will be explained in brief. The steering device, as shown in Figs. 5(a) to (c), transmits the rotational motion of a steering wheel 66 to a steering gear 68 through a steering column being composed of one or a plurality of steering shafts 62 for the purpose of converting the rotational motion of the steering wheel into the reciprocating motion of tie rods 69. In the case where the steering shafts 62 cannot be arranged in a straight line due to mounting space or the like, one or a plurality of shaft couplings is disposed between the steering shafts 62 to be able to transmit correct rotational motion to the steering gear 68 even in a state of bending the steering shafts 62. The fixed-type constant velocity universal joint according to the embodiment of the present invention is used as the shaft coupling 61. A symbol α in Fig. 5(b) represents a bend angle of the joint, and a large bend angle exceeding 30° can be set.

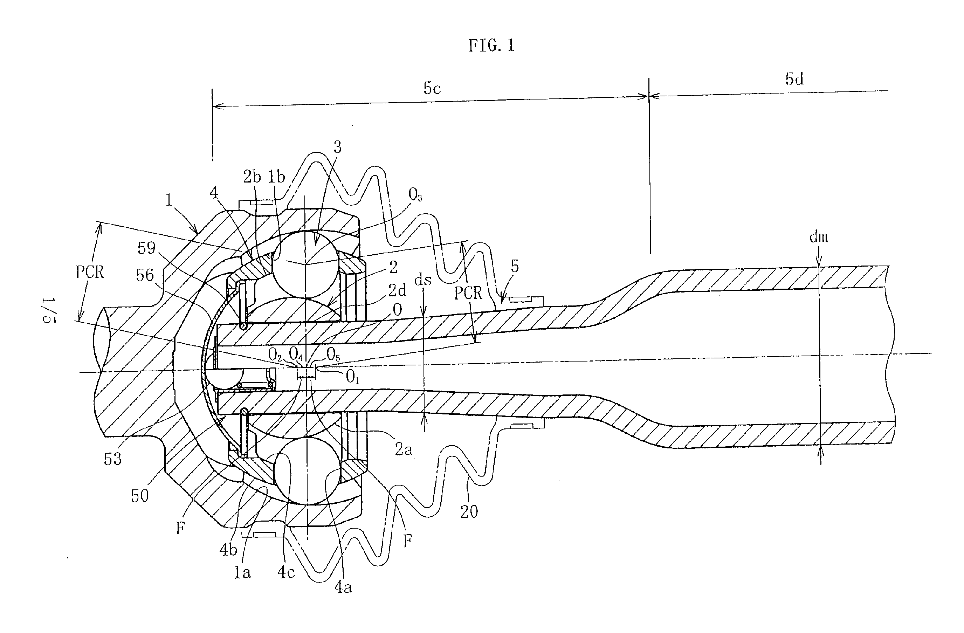

The fixed-type constant velocity universal joint, as shown in Fig. 1, has a connecting shaft 5 which is connected to a steering shaft through a yoke.

The hollow connecting shaft 5 is composed of an axial end section having teeth coupled to an engagement section 2d of an inner member 2, and a middle section continued from the axial end section. In this embodiment, the connecting shaft 5 is molded by drawing an axial end section of a pipe material with an outside diameter of dm, and then the teeth (splines or serrations) are molded in the outer periphery of the drawing molded axial end section on an axial end side by form rolling or the like. The outside diameter of the axial end section is ds, and the outside diameter of the middle section is dm as with that of the pipe material (ds < dm).

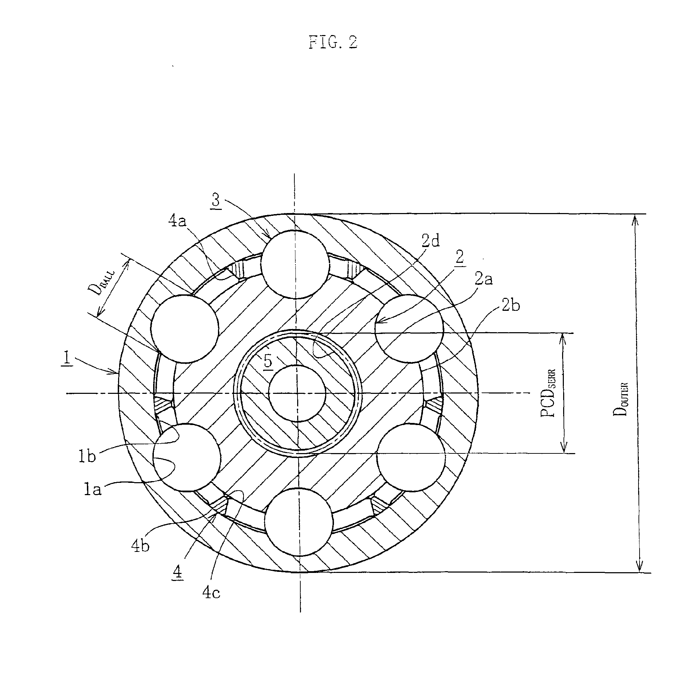

The joint is configured to include: an outer member 1 being an outer joint member in which six curved track grooves 1a are formed in an inside diameter surface 1b in an axial direction; an inner member 2 being an inner joint member in which six curved track grooves 2a are formed in an outside diameter surface 2b in the axial direction, and serrations (or splines) 2d for coupling the connecting shaft 5 are formed in an inside diameter surface; six balls 3 disposed in ball tracks which are formed by the synergy between the track grooves 1a of the outer member 1 and the track grooves 2a of the inner member 2; and a retainer 4 which rotatably holds the balls 3 in its pockets 4a (refer to Fig. 2). A rubber or resin boot 20 is attached between the outer member 1 and the connecting shaft 5 to prevent the entry of dust and the like into the joint.

In this embodiment, the center O1 of the track groove 1a of the outer member 1 with respect to the spherical center of the inside diameter surface 1b and the center 02 of the track groove 2a of the inner member 2 with respect to the spherical center of the outside diameter surface 2b are offset oppositely to each other at the same distance (F) in the axial direction. Both of the spherical center of an outside diameter surface 4b of the retainer 4 and the spherical center of the inside diameter surface 1b of the outer member 1 being a guide surface of the outside diameter surface 4b of the retainer 4 are in a joint center plane O including the centers 03 of the balls 3. Also, both of the spherical center of an inside diameter surface 4c of the retainer 4 and the spherical center of the outside diameter surface 2b of the inner member 2 being a guide surface of the inside diameter surface 4c of the retainer 4 are in the joint center plane O. Accordingly, the foregoing offset amount (F) of the outer member 1 becomes the axial distance between the center O1 of the track groove 1a and the joint center plane O. The foregoing offset amount (F) of the inner member 2 becomes the axial distance between the center 02 of the track groove 2a and the joint center plane O, and hence both offset amounts are equal. The center O1 of the track groove 1a of the outer member 1 and the center 02 of the track groove 2a of the inner member 2 deviate oppositely (the center O1 of the track groove 1a is on the side of an opening of the joint, and the center 02 of the track groove 2a is on the side of a recess of the joint) at the same distance (F) with respect to the joint center plane O in the axial direction. Each of the length of a segment connecting the center O1 of the track groove 1a of the outer member 1 and the center 03 of the ball 3 and the length of a segment connecting the center 02 of the track groove 2a of the inner member 2 and the center 03 of the ball 3 is PCR. Both lengths are equal.

When the outer member 1 is displaced from the inner joint member 2 at an angle θ, the balls 3 guided by the retainer 4 are always maintained in a bisector plane (θ /2) of the angle θ at any operating angle θ, and hence the constant velocity of the joint is ensured.

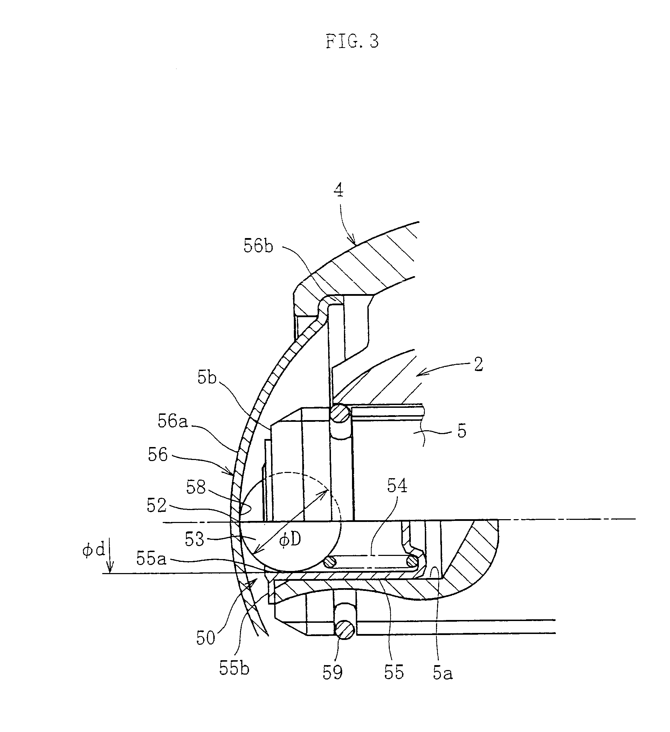

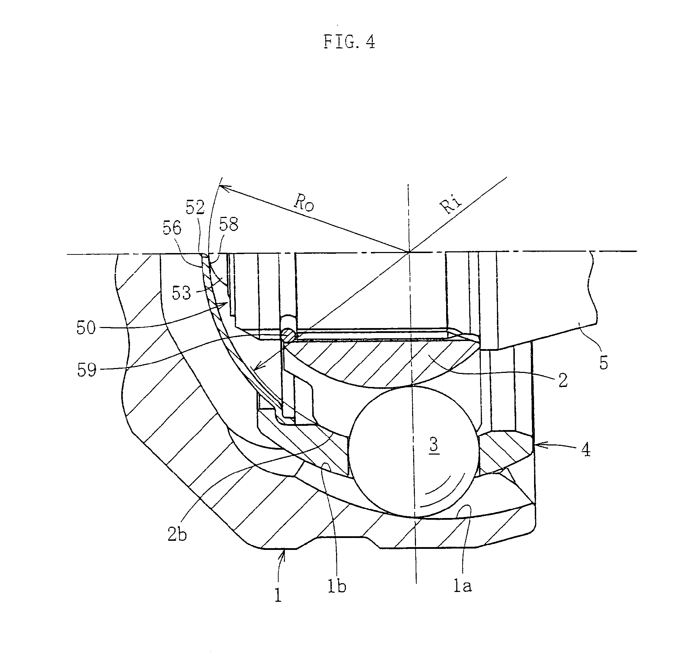

In the fixed constant velocity universal joint, as shown in Figs. 1, 3, and 4, a plunger unit 50 is attached to an axial end of the connecting shaft 5 in order to restrain rotational backlash. The plunger unit 50, as shown in Figs. 3 and 4, is an assembly which comprises a ball 53 being a press member having a press section 52 in its end, a compression coil spring 54 being an elastic member, and a case 55 being a container member for containing the ball 53 and the compression coil spring 54. The compression coil spring 54 is a source of elastic force which presses the ball 53 on the deeper side of the outer member 1 (in a ball protruding direction).

The structure of attaching the foregoing plunger unit 50 to the connecting shaft 5 is as follows.

The plunger unit 50 is fixed when its case 55 is press-fitted or bonded to a recessed section 5a formed in the axial end of the connecting shaft 5. When the case 55 is completely fixed, a flange 55b of the case 55 engages with an axial end surface 5b of the connecting shaft 5, so that the position of the plunger unit 50 is fixed with reference to the axial end surface. In other words, it is possible to fix the position of the plunger unit 50 if there are variations in the depth of the recessed section 5a of the connecting shaft 5 due to its processing tolerance, because the depth of the recessed section 5a is larger than the axial length of the case 55 of the plunger unit 50 and the flange 55b engages with the axial end surface 5b of the connecting shaft 5.

The case 55 of the plunger unit 50 is in the shape of a cylinder with a bottom, and an engaged section 55a protruding on the side of an inside diameter is provided at the edge of its opening end. Since the inside diameter φ d of the engaged section 55a is smaller than the outside diameter φ D of the ball 53, it is possible to prevent the ball 53 from dropping off. Accordingly, the ball 53, the compression coil spring 54, and the case 55 are assembled into a unit. As means for providing an engaged section to prevent the ball 53 from dropping off, various structures are available in addition to forming the engaged section 55a by swaging the edge of the opening end of the case 55 along the whole circumference.

As shown in Figs. 3 and 4, a receiver member 56 is attached to a deeper side end section of the outer member 1 of the retainer 4. The receiver member 56 is in the shape of a lid covering an end opening of the retainer 4, and is composed of a spherical section 56a in a partial spherical shape and an attachment section 56b formed in the outer periphery of the spherical section 56a in the shape of a ring. The inner surface (surface opposed to the connecting shaft 5) of the spherical section 56a is a concave spherical surface which functions as the receiving section 58 for receiving the pressure from the press section 52. The attachment section 56b is fixed in the end of the retainer 4 by proper means such as press and welding.

To smoothly slide the press section 52 of the plunger unit 50 on the receiving section 58 of the receiver member 56 when the connecting shaft 5 of the constant velocity universal joint takes an operating angle, as shown in Fig. 4, the inside diameter Ro of the receiving section 58 in a concave spherical shape is set larger than the outside diameter (φ D/2) (refer to Fig. 3) of the ball 53 having the press section 52 (Ro > (φ D/2)). To prevent the interference between the receiver member 56 and the inner member 2 in taking an operating angle θ, the inside diameter Ro of the receiving section 58 is set larger than the inside diameter Ri of the spherical inner surface of the retainer 4 (Ro > Ri).

In the foregoing structure, when a serration shaft section of the connecting shaft 5 and the inner member 2 are coupled by serrations and attaching a snap ring 59 completely couples both (refer to Figs. 3 and 4), the press section 52 of the plunger unit 50 and the receiving section 58 of the receiver member 56 come into contact with each other, and then the ball 53 is retracted and the compression coil spring 54 is compressed. Since the position of the plunger unit 50 is fixed with respect to the axial end surface of the connecting shaft 5 as described above, it is possible to always keep the contact state between the press section 52 and the receiving section 58 by stabilizing the attachment state of the press section 52, and hence pressure from the press section 52 can securely act on the receiving section 58.

By reasons described above, the ratio r2 (= DOUTER/PCDSERR) between the outside diameter (DOUTER) of the outer member 1 and the pitch circle diameter (PCDSERR) of the teeth (serrations or splines) in the engagement section 2d of the inner member 2 is set at 3.0 ≦ r2 ≦ 5.0.

As described above, the constant velocity universal joint according to this embodiment can reduce the ratio r2 (= DOUTER/PCDSERR) while ensuring sufficient strength, load-carrying capacity, and durability, so that it is possible to further make the outside diameter (DOUTER) compact.

The structure of this embodiment described above can be applicable to motive power transmission of a propeller shaft, a drive shaft, and the like of an automobile.

## Claims

1. A constant velocity universal joint comprising: an outer member provided with a spherical inner surface in which a plurality of track grooves are formed; an inner member provided with a spherical outer surface in which a plurality of track grooves are formed; balls disposed in wedge-shaped ball tracks which are formed by the synergy between the track grooves of the outer member and the track grooves of the inner member; and a retainer disposed between the spherical inner surface of the outer member and the spherical outer surface of the inner member to hold the balls, the balls always making contact with the ball tracks by preload applying means, wherein
the constant velocity universal joint further comprising a hollow connecting shaft having an axial end section having teeth which are engaged with an engagement section of the inner member, and a middle section continued from the axial end section; and
a ratio r3 (= dm/DOUTER) of an outside diameter (dm) of the middle section of the connecting shaft to an outer diameter (DOUTER) of the outer member is 0.26 ≦ r3 ≦ 1.0.

2. A constant velocity universal joint according to claim 1, wherein a ratio r2 (= DOUTER/PCDSERR) between the outside diameter (DOUTER) of the outer member and a pitch circle diameter (PCDSERR) of the teeth in the engagement section of the inner member is set in a range of 3.0 ≦ r2 ≦ 5.0.

3. A constant velocity universal joint according to claim 1 or 2, wherein the hollow connecting shaft is molded by means of drawing an end section of a pipe material with an outside diameter (dm).

4. A constant velocity universal joint wherein the constant velocity universal joint as set forth in any of claims 1 to 3 is used for steering.
